Europäisches Patentamt

European Patent Office

Office européen des brevets

(19)

(11) Veröffentlichungsnummer: **0 224 114**

**A2**

(12) # EUROPÄISCHE PATENTANMELDUNG

(21) Anmeldenummer: 86115613.1

(51) Int. Cl.⁴ **B23B 31/12**

(22) Anmeldetag: 11.11.86

(30) Priorität: 27.11.85 DE 3541964

(43) Veröffentlichungstag der Anmeldung:
03.06.87 Patentblatt 87/23

(84) Benannte Vertragsstaaten:
AT BE CH DE ES FR GB IT LI NL SE

(71) Anmelder: **Josef Albrecht Bohrfutterfabrik GmbH + Co**
**Plochinger Strasse 15 a**
**D-7300 Esslingen a.N.(DE)**

(72) Erfinder: **Die Erfinder haben auf ihre Nennung verzichtet**

(74) Vertreter: **Rüger, Rudolf, Dr.-Ing. et al**
**Patentanwälte Dr.-Ing. R. Rüger Dipl.-Ing. H.P. Barthelt Webergasse 3 Postfach 348**
**D-7300 Esslingen/Neckar(DE)**

(54) Selbstspannendes Bohrfutter.

(57) Ein selbstspannendes Borhfutter weist ein axial verstellbares Gegenhalteelement (14) auf, das unter drehfester Verriegelung einer das Verschlußteil des Bohrfutters tragenden, derhbar gelagerten Hülse (11) gegen eine Widerlagerfläche (17) an dem Grundkörper (1) des Bohrfutters oder an einem starr mit diesem verbundenen Teil (16) reibschlüssig verklemmbar ist. Um auch im verklemmten Zustand die Nachspanneigenschaften zu erhalten, ist das Gegenhalteelement axial federnd gegen die Widerlagerfläche abstützbar.

EP 0 224 114 A2

## Selbstspannendes Bohrfutter

Die Erfindung betrifft ein selbstspannendes Bohrfutter mit einem zur Kupplung mit einer Antriebsspindel eingerichteten, im wesentlichen zylindrischen Grundkörper, der eine eingeschraubte koaxiale Druckspindel trägt, auf der formschlüssig mit ihr gekuppelte Spannbacken axial abgestützt sind, die in einem Bakkenträger geführt sind, welcher gemeinsam mit einem mit den Spannbacken radial zusammenwirkenden ringförmigen Verschlußteil mit einer auf dem Grundkörper verdrehbar gelagerten Hülse drehfest verbunden ist, wobei auf der Hülse ein axial verstellbares Gegenhalteelement angeordnet ist, das unter drehfester Verriegelung der Hülse gegen eine Widerlagerfläche an dem Grundkörper oder an einem starr mit diesem verbundenen Teil reibschlüssig verklemmbar ist.

Selbstspannende Bohrfutter, von denen in der Praxis eine Reihe von Ausführungsformen bekannt sind, haben den Vorteil einfacher und schneller Bedienung ohne Zuhilfenahme eines Spannschlüssels. Mit zunehmender Belastung des eingespannten Bohrers verdreht sich der Grundkörper in entsprechender Weise etwas gegen die in ihn eingeschraubt Druckspindel, mit dem Ergebnis, daß die von den Spannbacken auf den Bohrerschaft ausgeübte Spannkraft in entsprechendem Maße vergrößert wird.

Bei Maschinen, die mit hoher Drehzahl der Bohrspindeln arbeiten, muß damit gerechnet werden, daß die Spindeln in Bruchteilen von Sekunden verhältnismäßig abrupt stillgesetzt werden. Dies birgt die Gefahr in sich, daß beim Einsatz von selbstspannenden Bohrfuttern die beim Stillsetzen der Spindeln auftretenden hohen Verzögerungswerte wegen der Schwungmasse des Verschlußteiles und der damit verbundenen Elemente zu einem ruckartigen Lösen der Verschlusses führen.

Aus der DE-OS 1 602 686 ist bereits eine Sicherungsvorrichtung gegen das Öffnen eines Bohrfutters bei Rücklauf des eingespannten Werkzeuges bekannt geworden, die insbesondere bei Verwendung des Bohrfutters mit einem Gewindebohrer eine Lockerung oder ein Öffnen des Bohrfutters beim Rücklauf des eingespannten Gewindebohrers verhüten soll. Zu diesem Zwecke ist ein auf die das Verschlußteil tragende Hülse aufgeschraubter Gegenhalte-Gewindering vorgesehen, der als Gegenhalteelement wirkt und axial gegen eine Widerlagerfläche verklemmbar ist, die an einem drehfest auf den Grundkörper aufgesetzten Haltering ausgebildet ist. Durch Festziehen des Gegenhalte-Gewinderings gegen den Haltering kann zwar ein unbeabsichtigtes Öffnen des Bohrfutters beim Rücklauf des Gewindebohrers verhindert werden, doch muß dies dadurch erkauft werden, daß die Selbstspannfunktion des Bohrfutters mit dem Festziehen des Gegenhalte-Gewinderinges ausgeschaltet ist.

Grundsätzlich gilt auch für andere in der Praxis bekannt gewordene Sicherungseinrichtungen, die ebenfalls die das Verschlußteil tragende Hülse dreh fest und starr mit dem Grundkörper des Bohrfutters verriegeln. Auch hier verhindert die Sicherungseinrichtung ein selbsttätiges Nachspannen des Bohrfutters bei zunehmender Belastung des eingespannten Werkzeugs.

Dies kann beim Gewindebohren wegen des durchgehärteten Schaftes des Gewindebolzens in Kauf genommen werden, stellt aber bei der normalen Verwendung des selbstspannenden Bohrfutters zum Bohren mittels eingespannter Spiralbohrer einen beträchtlichen Nachteil dar.

Aufgabe der Erfindung ist es deshalb, hier abzuhelfen und ein selbstspannendes Bohrfutter zu schaffen, das einerseits gegen unbeabsichtigtes Öffnen oder Lockern des Verschlusses bei abruptem Stillsetzen der Spindel einwandfrei gesichert ist und das andererseits auch im gesicherten Zustand seine selbsttätige Nachspanneingenschaft beibehält.

Zur Lösung dieser Aufgabe ist das eingangs genannte selbstspannende Bohrfutter erfindungsgemäß dadurch gekennzeichnet, daß das Gegenhalteelement axial federnd gegen die Widerlagerfläche abstützbar ist.

Durch entsprechende Wahl der axialen Vorspannung in Abhängigkeit von der vorhandenen Reibpaarung zwischen der Widerlagerfläche und der mit dieser zusammenwirkenden, durch das Gegenhalteelement angepreßten Gegenhaltefläche kann die an dieser Stelle vorhandene reibschlüssige Kupplung so bemessen werden, daß einerseits ein unbeabsichtigtes Lösen des Verschlusses bei abruptem Drehzahlwechsel ausgeschlossen ist und andererseits der Grundkörper gegenüber der das Verschlußteil tragende Hülse sich bei zunehmender Werkzeugbelastung um das für eine selbsttätige Nachspannung erforderliche (geringe) Maß verdrehen kann.

Bei der erwähnten Ausführungsform, bei der das Gegenhalteelement ein auf die Hülse aufgeschraubter Gegenhalte-Gewindering ist, ist es vorteilhaft, wenn zwischen dem Gewindering und der Widerlagerfläche wenigstens ein elastisch federnder Ring angeordnet ist. Dieser elastische Ring kann mit dem Gewindering oder der Widerlagerfläche verbunden sein. Es sind aber auch Fälle denkbar, in denen der elastische Ring einfach lose dazwischengelegt ist.

Der elastische Ring besteht aus einem geeigneten Material, das mit der Widerlagerfläche die zweckmäßige Reibpaarung ergibt. Als besonders zweckmäßig hat es sich erwiesen, wenn der aus einem elastomeren Material bestehende Ring an den Gewindering oder die Widerlagerfläche aufvulkanisiert ist. Die praktische Erfahrung hat gezeigt, daß dabei ein elastomeres Material mit einer Shorehärte von ca. 80 von Vorteil ist.

Die mit der Widerlagerfläche zusammenwirkende Fläche des elastischen Ringes und die Widerlagerfläche selbst sind zweckmäßigerweise als parallele Flächen ausgebildet, die rechtwinklig zu der Achse des Grundkörpers verlaufen können. Schließlich ist es noch zweckmäßig, wenn dem Gewindering auf der der Widerlagerfläche abgewandten Seite ein an der Hülse angeordneter nachgiebiger Anschlag im Abstand zugeordnet ist, der den Gewindering im gelösten Zustand in einer definierten Stellung hält. Dieser Anschlag kann durch einen an dem Grundkörper abstützbaren kompressiblen Ring gebildet sein.

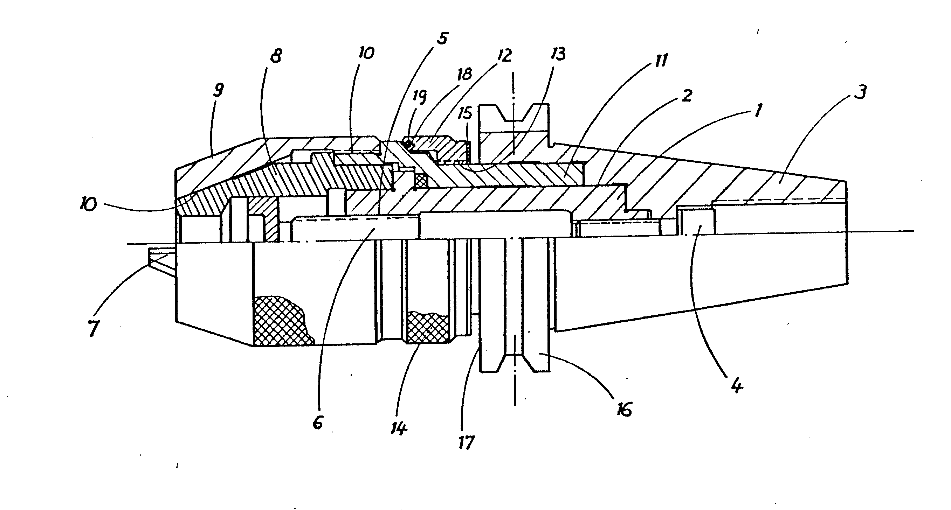

In der Zeichnung ist ein Ausführungsbeispiel des Gegenstandes der Erfindung dargestellt. Die Figur zeigt ein selbstspannendes Bohrfutter gemäß der Erfindung, teilweise im axialen Schnitt, und in einer Seitenansicht.

Das selbstspannende Bohrfutter weist einen im wesentlichen zylindrischen Grundkörper 1 auf, der in eine entsprechende koaxiale Bohrung 2 eines Steilkegels 3 eingesetzt und mit diesem über eine Innensechskantschraube 4 drehfest verbunden ist. In eine koaxiale Gewindebohrung 5 des Grundkörpers 1 ist eine Druckspindel 6 eingeschraubt, auf der axial Spannbacken 7 abgestützt sind, von denen in der Figur lediglich einer dagestellt ist. Der oberhalb der Symmetrielinie in der Schnittdarstellund liegende Spannbacken ist der besseren Klarheit wegen weggelassen.

Die Spannbacken 7 sind in entsprechenden Führungsnuten eines Backenträgers 8 gelagert, welcher von einer Verschlußhülse 9 umgeben ist, die über eine Innenkonusfläche 10 in an sich bekannter Weise radial mit den Spannbacken 7 zusammenwirkt. Die Verschlußhülse 9 ist bei 100 mit einer Hülse 11 drehfest verbunden, die ihrerseits auf dem Grundkörper 1 drehbar gelagert und gegen diesen über Kugeln 12 axial abgestützt ist.

Auf ein Außengewinde 13 der Hülse 11 ist in noch zu beschreibender Weise als Gegenhalteelement dienender Gegenhalte-Gewindering 14 aufgeschraubt, der an einer Planfläche einen aufvulkanisierten elastischen Ring 15 aus einem elastomeren Material, vorzugs weise mit einer Shorehärte von ca. 80 trägt. Dem elastischen Ring 15 gegenüberliegend ist an einem Halteflansch 16 des Steilkegels 3 eine Widerlagerfläche 17 ausgebildet, die rechtwinklig zu der Mittelachse verlaufend parallel zu der zugeordneten Fläche des elastischen Rings 15 ausgerichtet ist.

Auf der dem elastischen Ring 15 abgewandten Seite ist der Gewindering 14 mit einem in eine entsprechende Ringnut eingelegten elastischen O-Ring 18 versehen, über den er sich in der in der Figur dargestellten gelösten Stellung an einer zugeordneten kegeligen Anschlagschulter 19 der Hülse 11 abstützt.

Vor dem Einführen eines nicht weiter dargestellten Spiralbohrers zwischen die Spannbacken 7 ist der Gegenhalte-Gewindering 14 in die in der Figur dargestellte gelöste Stellung verdreht worden, in der er mit dem O-Ring 18 an der Anschlagfläche 19 anliegt. Der O-Ring 18 verhindert dabei, daß der Gegenhalte-Gewindering 14 sich mit der Anschlagfläche 19 verklemmt, so daß das Losschrauben behindert wäre.

Nach dem Einführen des Spiralbohrers wird dieser dadurch gespannt, daß das Verschlußteil 9 nach rechts verdreht wird, wobei der Steilkegel 3 festgehalten ist. Dabei wird die Druckspindel 6 in dem Grundkörper 1 vorgeschraubt, wobei sie die in dem Backenträger 8 geführten Spannbacken 7 axial vorschiebt, so daß diese über die Konusfläche 10 des Verschlußteiles 9 radial nach innen gedrückt und mit dem Bohrerschaft verspannt werden.

Anschließend wird nun der Gegenhalte-Gewindering 14 durch Linksdrehen hochgeschraubt, bis der elastische Ring 15 an der Widerlagerfläche 17 unter Vorspannung anliegt und damit die Hülse 11 reibschlüssig gegen die Widerlagerfläche 17 und somit den Grundkörper 1 verspannt.

Der so erzielte Reibschluß verhindert ein unbeabsichtigtes Lösen des Verschlusses bei abruptem Drehzahlwechsel oder Stillsetzung der Spindel. Gleichzeitig bleibt aber die selbsttätige Nachspanneigenschaft des Bohrfutters erhalten, weil bei zunehmendem auf den eingespannten Bohrer zur Wirkung kommendem Gegendrehmoment sich der Grundkörper 1 über die insoweit geringfügig durchrutschende Widerlagerfläche 17 gegen den Gegenhalte-Gewindering 14 und damit die Hülse 11 verdrehen kann.

Bei dem dargestellten Ausführungsbeispiel ist die Widerlagerfläche 17 an einem Teil des Steilkegels 3 ausgebildet, wie dies bei einem solchen sogenannten Kurzspannfutter vorteilhaft ist. Es sind auch andere Ausführungsformen möglich, bei denen die Widerlagerfläche unmittelbar an dem Grundkörper 1 oder an einem mit diesem verbundenen Teil, beispielsweise einem eigenen Haltering, vorgesehen ist.

Der elastische Ring besteht bei der beschriebenen Ausführungsform aus einem elastomeren Kunststoffmaterial. Unter gewissen Umständen wäre auch ein Metallfederring (Wellfeder etc.) denkbar, wie es auch möglich wäre, den elastischen Ring 15 an der Wider lagerfläche 17 aufzuvulkanisieren oder anzukleben oder diese insgesamt in dem mit dem Gegenhalte-Gewindering 14 zusammenwirkenden Bereich elastisch nachgiebig und/oder mit einem höheren Reibwert auszubilden.

**Ansprüche**

1. Selbstspannendes Bohrfutter mit einem zur Kupplung mit einer Antriebsspindel eingerichteten, im wesentlichen zylindrischen Grundkörper, der eine eingeschraubte koaxiale Druckspindel trägt, auf der formschlüssig mit ihr gekuppelte Spannbacken axial abgestützt sind, die in einem Bakkenträger geführt sind, welcher gemeinsam mit einem mit den Spannbacken radial zusammenwirkenden ringförmigen Verschlußteil mit einer auf dem Grundkörper verdrehbar gelagerten Hülse drehfest verbunden ist, wobei auf der Hülse ein axial verstellbares Gegenhalteelement angeordnet ist, das unter drehfester Verriegelung der Hülse gegen eine Widerlagerfläche an dem Grundkörper oder an einem starr mit diesem verbundenen Teil reibschlüssig verklemmbar ist, dadurch gekennzeichnet, daß das Gegenhalteelement (14) axial federnd gegen die Widerlagerfläche (17) abstützbar ist.

2. Bohrfutter nach Anspruch 1, bei dem das Gegenhalteelement ein auf die Hülse aufgeschraubter Gegenhalte-Gewindering ist, dadurch gekennzeichnet, daß zwischen dem Gewindering - (14) und der Widerlagerfläche (17) wenigstens ein elastisch federnder Ring (15) angeordnet ist.

3. Bohrfutter nach Anspruch 2, dadurch gekennzeichnet, daß der elastische Ring (15) mit dem Gewindering (14) oder der Widerlagerfläche (17) verbunden ist.

4. Bohrfutter nach Anspruch 3, dadurch gekennzeichnet, daß der aus einem elastomeren Material bestehende elastische Ring (15) an dem Gewindering (14) oder der Widerlagerfläche (17) aufvulkanisiert ist.

5. Bohrfutter nach Anspruch 4, dadurch gekennzeichnet, daß das elastomere Material eine Shorehärte von ca. 80 hat.

6. Bohrfutter nach einem der Ansprüche 2 bis 5, dadurch gekennzeichnet, daß die mit der Widerlagerfläche (17) zusammenwirkende Fläche des elastischen Ringes (15) und die Widerlagerfläche - (17) parallele Flächen sind.

7. Bohrfutter nach einem der Ansprüche 2 bis 6, dadurch gekennzeichnet, daß dem Gewindering (14) auf der der Widerlagerfläche (17) abgewandten Seite ein an der Hülse (11) angeordneter nachgiebiger Anschlag (18, 19) im Abstand zugeordnet ist.

8. Bohrfutter nach Anspruch 7, dadurch gekennzeichnet, daß der Anschlag durch einen an dem Grundkörper (1) abstützbaren kompressiblen Ring (18) gebildet ist.

9. Bohrfutter nach einem der vorhergehenden Ansprüche, dadurch gekennzeichnet, daß die Widerlagerfläche (17) oder die mit diesem zusammenwirkende Fläche des Gegenhalteelementes - (14, 15) einen Reibbelag trägt oder eine aufgerauhte Oberfläche aufweist.